# EUROPEAN PATENT APPLICATION

(11) **EP 4 692 391 A1**
(43) Date of publication of application: **11.02.2026**
(21) Application number: 24780748.0
(22) Date of filing: 28.03.2024
(51) Int. Cl.: C22C 27/04, B22F 1/00, B22F 1/14, B22F 1/052, B22F 7/06, C22C 1/04

(54) **TUNGSTEN ALLOY, STRUCTURE, AND RHENIUM POWDER**

(30) Priority: 31.03.2023 JP 2023058962
(71) Applicant: Niterra Materials Co., Ltd., Yokohama-shi, Kanagawa 235-0032 (JP)
(72) Inventor: SAWAI, Yusuke, Yokohama-shi, Kanagawa 235-0032 (JP); YAMAGUCHI, Satoshi, Yokohama-shi, Kanagawa 235-0032 (JP); MIZOBE, Masanori, Yokohama-shi, Kanagawa 235-0032 (JP)
(74) Representative: AWA Sweden AB
(86) International application number: PCT/JP2024/012902
(87) International publication number: WO 2024/204650

(57) **Abstract**

According to one embodiment, a tungsten alloy includes rhenium. A standard deviation of a rhenium concentration based on point analysis by scanning electron microscope/energy dispersive X-ray spectroscopy at arbitrary six points on an arbitrary cross section is 1.0 wt% or less.

## Description

### TECHNICAL FIELD

Embodiments of the present invention relate to a tungsten alloy, a structure, and rhenium powder.

### BACKGROUND ART

A tungsten alloy containing rhenium is applied to various uses. For example, a wire of a tungsten alloy containing rhenium has a higher electrical resistance characteristic and a higher wear resistance, and higher tensile strength or ductility, than a tungsten wire. Thus, the tungsten alloy containing rhenium is used for a probe pin for a semiconductor inspection, a heater for an electron tube, a filament material for an earthquake-resistant bulb, a thermocouple, a filament for a fluorescent display tube, a medical needle, and the like. In addition, tungsten has a high melting point and has a characteristic of generating X-rays when irradiated with a high-speed electron beam. By incorporating rhenium into the tungsten, toughness is improved, roughness of an electron beam irradiation surface is suppressed, and the life can be prolonged. Therefore, a tungsten alloy containing rhenium is used as an X-ray generation source of an X-ray tube that is employed for various uses such as a medical use, a security use, and the like.

However, if rhenium cannot uniformly be dispersed in tungsten, the above-described characteristics cannot fully be exhibited.

### CITATION LIST

### PATENT LITERATURE

Patent document 1: Jpn. Pat. Appln. KOKAI Publication No. H7-204207
Patent document 2: Jpn. Pat. Appln. KOKAI Publication No. 2002-75059

### SUMMARY OF INVENTION

### TECHNICAL PROBLEM

A problem to be solved by the invention is to provide a tungsten alloy containing rhenium, which is excellent in dispersibility of rhenium, a structure including the tungsten alloy, and rhenium powder used as a raw material of the tungsten alloy.

### SOLUTION TO PROBLEM

According to one embodiment, a tungsten alloy includes rhenium. A standard deviation of a rhenium concentration based on point analysis by scanning electron microscope/energy dispersive X-ray spectroscopy (scanning electron microscope-energy dispersive X-ray spectroscopy) at arbitrary six points on an arbitrary cross section is 1.0 wt% or less.

According to the embodiment, a structure includes the tungsten alloy according to the embodiment.

According to the embodiment, a structure includes:
a first member including at least one of molybdenum or a molybdenum alloy; and
a second member stacked on the first member and containing the tungsten alloy according to the embodiment.

According to the embodiment, rhenium powder used for a raw material of the tungsten alloy according to the embodiment is provided. The rhenium powder has a frequency distribution in which a number ratio of particles having a particle size of less than 0.5 µm at a time when dispersion is performed at a vacuum degree of -0.9 bar or more and -1.0 bar or less is 20% or more.

### BRIEF DESCRIPTION OF DRAWINGS

FIG. 1 is a graph illustrating an example of a frequency distribution of particle sizes of rhenium powder according to an embodiment.
FIG. 2 is a schematic view illustrating an example of rhenium powder of the embodiment.
FIG. 3 is a cross-sectional view schematically illustrating an example of a structure of the embodiment.
FIG. 4 is a view illustrating an electron image of a tungsten alloy of Example 1 by an electron probe micro analyzer (EPMA).
FIG. 5 is a view illustrating an electron image of a tungsten alloy of Comparative Example 1 by an electron probe micro analyzer.

### DESCRIPTION OF EMBODIMENTS

The present inventors paid attention to the relationship between the stability of discharge characteristics and the dispersibility of rhenium in a tungsten alloy, and obtained the following findings. Rhenium is dispersed in the tungsten alloy in a state of being solid-dissolved in tungsten, and can improve the strength of the tungsten alloy. By improving the dispersibility of rhenium, the strength of the tungsten alloy can be made uniform, and therefore the presence of a portion, where the strength of the material is locally low, can be reduced. As a result, even in a case where the tungsten alloy is exposed to high temperatures, the occurrence of abnormal portions, such as cracks, can be reduced. As a result, the tungsten alloy can exhibit a long-term discharge characteristic (electron emission characteristic). Specifically, the tungsten alloy of the embodiment has a standard deviation of a Re concentration of 1.0 wt% or less, which is based on point analysis by a scanning electron microscope/energy dispersive X-ray spectrometry (SEM/EDX) at arbitrary six points on an arbitrary cross section.

The dispersibility of rhenium in the tungsten alloy can be improved by setting the standard deviation of the Re concentration (wt%) at 1.0 wt% or less. Therefore, since rhenium can uniformly be dispersed in tungsten in a solid solution state, the strength of the tungsten alloy can be improved. As a result, even in a case where the tungsten alloy is exposed to high temperatures, the occurrence of abnormal portions, such as cracks, can be reduced, and thus the long-term discharge characteristics can be exhibited.

The details of the point analysis by the scanning electron microscope/energy dispersive X-ray spectrometry (hereinafter, SEM/EDX) are described below.

The shape of the tungsten alloy to be measured is not particularly limited. For example, in a case where the tungsten alloy has a disk shape, a cylindrical shape or a ring shape, the tungsten alloy is cut perpendicularly to the diametric direction to take out a small piece. In addition, in a case where the tungsten alloy has a columnar shape such as wire rod, the tungsten alloy is cut in parallel to the diametric direction to take out a small piece. The taken-out small piece is embedded in resin, and then mirror-polished to obtain a sample. Three arbitrary fields of view of the obtained sample are observed at a magnification of 2000 times by using the SEM/EDX. Two arbitrary locations are selected for each field of view, and the rhenium concentration (wt%) in the tungsten alloy is measured by a measurement method using the energy dispersive X-ray spectrometry (EDX) in regard to six locations in total. Specifically, point analysis is performed to measure the rhenium concentration at only six points selected from an arbitrary cross section of the tungsten alloy. Note that the acceleration voltage at the time of the point analysis is preferably 15 kV. An average value (wt%) is calculated from the obtained rhenium concentrations (wt%), and a standard deviation (wt%) is obtained.

As described in the above method, the arbitrary six points on the arbitrary cross section means that six measurement regions are selected from one arbitrary cross section.

In the tungsten alloy of the embodiment, the formation of a solid solution of the rhenium component and the tungsten component can be confirmed by, for example, the following method. At a time when the metal structure of the tungsten alloy is observed by an SEM backscattered electron image, a tungsten alloy portion in which the Re region and the W region are not clearly defined is determined to be a ReW solid solution.

The rhenium content in the tungsten alloy of the embodiment can be set at, for example, 2 wt% or more and 30 wt% or less. The rhenium content is a value analyzed by inductively coupled plasma-optical emission spectrometry (ICP-OES). By setting the rhenium content in the tungsten alloy at 2 wt% or more, the elongation of tungsten at high temperatures can be improved, and the workability can be enhanced. In addition, the strength of the tungsten alloy can be increased by solid solution strengthening. Furthermore, by setting the rhenium content in the tungsten alloy at 30 wt% or less, rhenium can be diffused and homogenized (solid-dissolved) in the tungsten matrix. As a result, it is possible to suppress the formation of a phase region (segregation phase of σ phase) in which the composition ratio of rhenium is locally high. By setting the rhenium content at 2 wt% or more and 30 wt% or less, the mechanical characteristics (strength and wear resistance) of structures such as a probe pin and a medical needle can be secured. The rhenium content is preferably, for example, 2 wt% or more and 28 wt% or less. A more preferable range is 2 wt% or more and 12 wt% or less.

The tungsten alloy of the embodiment may contain potassium (K) as a dopant in an amount of 30 wtppm or more and 90 wtppm or less. The content of potassium is a value analyzed by the inductively coupled plasma-optical emission spectrometry (ICP-OES). By containing potassium, the tensile strength and creep strength at high temperatures can be improved by the doping effect. By setting the potassium content at 30 wtppm or more, the doping effect can be made sufficient. In addition, by setting the potassium content at 90 wtppm or less, the workability and yield of the tungsten alloy can be improved. By containing potassium as a dopant in an amount of 30 wtppm or more and 90 wtppm or less, for example, wires (for example, thin wires) for thermocouples and electronic tube heaters, which are made of the tungsten alloy of the embodiment as raw material, can be produced with a high yield, while ensuring high-temperature characteristics (prevention of breakage and deformation during use at high temperatures).

The tungsten alloy of the embodiment can be produced by, for example, the following method.

### <Raw Materials>

Examples of the raw material of the tungsten alloy include tungsten powder and rhenium powder, but the raw material is not limited to these, and necessary additives can be included in the raw material of the tungsten alloy.

The rhenium powder preferably has an average particle size of less than 8 µm. In addition, the tungsten powder preferably has an average particle size of less than 16 µm. The tungsten powder is pure tungsten powder excluding inevitable impurities, or is doped tungsten powder containing potassium (K) in consideration of the yield up to the tungsten alloy. In a case where the average particle size of the rhenium powder is 8 µm or more, or in a case where the average particle size of the tungsten powder is 16 µm or more, the diffusion distance of rhenium atoms or tungsten atoms for diffusing and homogenizing (solid-dissolving) rhenium in the tungsten matrix increases, and the σ phase is easily formed.

The average particle size of the rhenium powder and the tungsten powder is measured by a laser diffraction method. The amount of metal powder used in one measurement is an amount that is recommended for a measuring device. In general, 0.02 g is recommended. In addition, the minimum amount is 0.01 g, and the maximum amount is 0.03 g. Besides, the measurement sample is weighed after being sufficiently stirred before measurement.

The ratio of the average particle size of the rhenium powder to the average particle size of the tungsten powder (Re average particle size/W average particle size) is preferably 0.1 or more and 2.0 or less. If the ratio of the average particle size of the rhenium powder to the average particle size of the tungsten powder is less than 0.1, or exceeds 2.0, the diffusion distance of rhenium atoms to the center of the tungsten particle, or the diffusion distance of tungsten atoms to the center of the rhenium particle become large, and the σ phase may easily be generated.

The rhenium powder can be composed of rhenium particles having a frequency distribution in which the number ratio of particles having a particle size of less than 0.5 µm is 20% or more at a time when particles are dispersed at a vacuum degree of -0.9 bar or more and -1.0 bar or less. If the frequency distribution of the particle size of the rhenium powder includes 20% or more of particles having a particle size of less than 0.5 µm, rhenium is easily diffused into tungsten in alloying rhenium and tungsten, and the rhenium component can uniformly be dispersed in the tungsten matrix. If the number of particles having a particle size of less than 0.5 µm is less than 20%, there is a possibility that the rhenium component is nonuniformly dispersed in the tungsten matrix, or rhenium that is not solid-dissolved in the tungsten remains in the alloy. The number ratio of the number of particles having a particle size of less than 0.5 µm in the frequency distribution is preferably 30% or more, and more preferably 50% or more.

Besides, for example, the rhenium powder can be composed of rhenium particles having a frequency distribution in which the number ratio of particles having a particle size of less than 1 µm is 50% or more at a time when particles are dispersed at a vacuum degree of -0.9 bar or more and -1.0 bar or less.

The dispersion at the above-described vacuum degree can be performed by using a powder disperser. The measurement method by the powder disperser is described below.

The particle size of the rhenium powder is measured using a scanning electron microscope (SEM). The sample for observation is prepared using a powder disperser Nebula manufactured by Phenom World Co., Ltd., or a powder disperser having a function equivalent thereto. A pin stub with a carbon tape being attached is placed in the disperser, and the powder is dispersed on the carbon tape. The vacuum degree at the time of dispersion can be set to, for example, -1.0 bar. If the powder disperser is not used, rhenium particles overlap each other, and accurate measurement cannot be performed. In addition, if the vacuum degree at the time of dispersion is less than -0.9 bar, the dispersion force weakens and the rhenium powder remains aggregated, and accurate measurement cannot be performed. The prepared sample is observed using a scanning electron microscope proX manufactured by Phenom World Co., Ltd. at a magnification of 20,000 times, and with a field of view of 13.6 µm and an acceleration voltage of 1.0 kV. Arbitrary 10 fields of view are photographed, and the particle size of the photographed SEM image is measured using Phenom ParticleMetric Software manufactured by Phenom World Co., Ltd. The observation position needs to be a position where particles of 100 pcs or more can be captured in 10 fields of view. In addition, the number of captures is preferably 300 pcs or more. Diameters equivalent to circular areas of all particles captured and measured by the Phenom ParticleMetric Software are recorded, and the ratio of the number of particles having a size of less than 0.5 µm to the total number of captured particles is calculated.

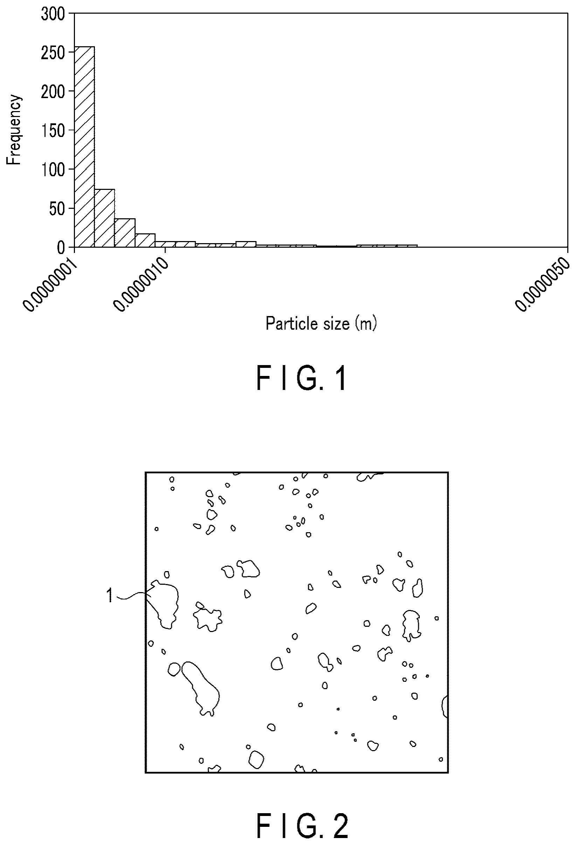

FIG. 1 illustrates an example of a frequency distribution (histogram) of rhenium powder in which the number of particles having a particle size of less than 0.5 µm is 20% or more. In FIG. 1, the horizontal axis represents the particle size (m) of the rhenium powder, and the vertical axis represents the frequency. In the frequency distribution shown in FIG. 1, the total number of frequencies for the number of particles is about 400, and the frequency of the particle size of 0.1 µm (0.1 × 10⁻⁶m) exceeds 250. In addition, FIG. 2 illustrates a schematic diagram of an example of an SEM image of the rhenium powder whose frequency distribution is shown in FIG. 1. As illustrated in FIG. 2, rhenium particles 1 have a small particle size and are less likely to aggregate.

### <Mixing of Raw Material Powders>

Tungsten powder and rhenium powder are mixed in such a manner that the content of rhenium is 2 wt% or more and 30 wt% or less. The mixing method is not particularly limited, and examples of the mixing method include a method of using an organic solvent-based solution capable of suppressing oxidation of the powders and achieving the objective at a low temperature required in a drying step to be described below, and mixing the powders in a slurry state. This method is particularly preferred because powder with good dispersibility is obtained. Besides, in order to ensure the homogeneity of the powder lot, it is more preferable to dry the slurry and then stir the same powder lot together in a dry manner.

### <Production of Molded Body>

Next, the mixed powder is put into a predetermined mold and press-molded to produce a molded body. At this time, a desirable pressing pressure is 150 MPa or more. Preferably, the pressing pressure is 200 MPa or more and 500 MPa or less. If the pressing pressure is less than 150 MPa, the density of the molded body is not sufficient, and it is thus difficult to obtain a high-density sintered body. On the other hand, if the pressing pressure exceeds 500 MPa, the molded body is likely to crack, which is not preferable. The obtained molded body is sintered in a hydrogen atmosphere, or in an inert gas atmosphere of argon or the like, or under vacuum. The sintering temperature is preferably 1900°C or above, and more preferably 2100°C or above. If the sintering temperature is lower than 1900°C, the diffusion of rhenium atoms and tungsten atoms does not sufficiently proceed during sintering. The sintered body is forged as needed.

The application of the tungsten alloy of the embodiment is not particularly limited. For example, the tungsten alloy can be applied to the use that requires discharge characteristics (electron emission characteristics). Examples of the structure containing the tungsten alloy of the embodiment include a target for an X-ray tube, a probe pin, a heater for an electron tube, a filament, a thermocouple, a medical needle, and a wire. Examples of the probe pin include a probe pin for a semiconductor inspection. Examples of the filament include a filament for an earthquake-resistant bulb and a filament for a fluorescent display tube.

A method for manufacturing a rod material and a wire material, such as a thermocouple and a wire, which are examples of the use of the tungsten alloy of the embodiment, are described. Although the manufacturing method is not particularly limited, the following method, for instance, may be adopted. Processing is continued until a required wire diameter is obtained.

Tungsten powder and rhenium powder are mixed such that the mixture has a rhenium content of from 2 wt% to 30 wt%. The mixing method is not particularly limited. A method of mixing the powders in a slurry form using water or an alcohol-based solution is particularly preferred since this method can provide powder with good dispersibility. It is assumed that the rhenium powder to be mixed has, for example, an average particle size of less than 8 µm. The tungsten powder is a pure tungsten powder excluding inevitable impurities, or a doped tungsten powder containing potassium in an amount determined in view of the yields up to wire materials. It is assumed that the tungsten powder has, for example, an average particle size of less than 16 µm.

Subsequently, the mixture powder is put into a predetermined mold and press-molded. The pressing pressure at this time is preferably 200 MPa or greater. For the sake of easier handling, the molded body may be subjected to preliminary sintering at 1200°C to 1400°C in a hydrogen furnace. The obtained molded body is sintered in a hydrogen atmosphere, or in an inert gas atmosphere of argon or the like, or under vacuum. The sintering temperature is preferably 1900°C or more, more preferably 2100°C or more, and still more preferably 2500°C or more. If the sintering temperature is less than 1900°C, rhenium atoms and tungsten atoms do not sufficiently diffuse during sintering. The upper limit of the sintering temperature is 3400°C (or equal to or lower than the melting point of tungsten of 3422°C). If the upper limit of the sintering temperature exceeds the melting point of tungsten (3422°C), the molded body cannot maintain its shape, and would turn into a defect. The relative density after the sintering is preferably 90% or more. By setting the relative density of the sintered body at 90% or more, it is possible to reduce the occurrence of cracking, chipping, breaking, etc., in the later swaging process (SW process).

The molding and the sintering may be simultaneously carried out through hot pressing in a hydrogen atmosphere, or in an inert gas atmosphere of argon, etc., or under vacuum. The pressing pressure is preferably 100 MPa or more, and the heating temperature is preferably 1700°C to 2825°C. This hot pressing method can provide a dense sintered body even at a relatively low temperature.

By using, as the rhenium powder, the rhenium particles having a frequency distribution in which the number ratio of particles having a particle size of less than 0.5 µm is 20% or more at a time when the particles are dispersed at a vacuum degree of -0.9 bar or more and -1.0 bar or less, the aggregation of the rhenium particles can be suppressed, and the formation of lumps of rhenium particles can be reduced. Therefore, even in the production of a rod material and a wire material, such as a wire, the diffusion of Re proceeds at a relative low temperature, and a sintered body that is the tungsten alloy of the embodiment can be obtained at sintering temperatures of 1900°C or more.

The sintered body obtained in this sintering step is subjected to a first swaging process (SW process). The first SW process is preferably carried out at a heating temperature of 1300°C to 1600°C. It is preferred that one heat treatment (one heating) give a ratio of reduction of the cross-sectional area (area reduction ratio) in a range of 5% to 15%. After the first SW process, a heat treatment is performed to control crystal orientations. Since the sintered body after the first SW process is yet to have its true density, strains in the sintered body tend to become nonuniform. Thus, inhomogeneity removal by a heat treatment is conducted. In one example, the heat treatment may employ a direct electrical heating method in a hydrogen atmosphere. In the case of the direct electrical heating, a flowing current preferably has a value of 14 A/mm² to 17 A/mm². If the current value falls below 14 A/mm², strain removal in the first SW process becomes insufficient. In addition, if the current value exceeds 17 A/mm², coarse recrystallization occurs in the outer peripheral portion of the cross section of the sintered body due to nonuniform stains, which would easily cause inhomogeneity in texture. Thus, it becomes difficult to control the crystal orientations.

After the first SW process and the heat treatment, a rolling process (RM (rolling machine) process) is performed. The RM process is preferably carried out at a heating temperature of 1200°C to 1600°C. The area reduction ratio with one heating is preferably 40% to 75%. As a rolling machine, a two-way to 4-way rolling machine, a die roll rolling machine, or the like may be used. With the RM process, the manufacturing efficiency can be greatly enhanced.

The sintered object (rhenium-tungsten rod material) after the RM process is subjected to a second SW process. The second SW process is preferably carried out at a heating temperature of 1200°C to 1500°C. The area reduction ratio with one heating is preferably 5% to 20%.

The rhenium-tungsten rod material after the second SW process is then subjected to a recrystallization treatment. The recrystallization treatment is preferably conducted, for example, by using a high-frequency heater at a processing temperature in a range of 1900°C to 2100°C, in a hydrogen atmosphere, or in an inert gas atmosphere of argon, etc., or under vacuum. If the heat treatment temperature falls below 1900°C, the recrystallization treatment is not fully carried out, which would easily result in coexistence of the processed texture and the recrystallized texture. If the heat treatment temperature exceeds 2100°C, coarse recrystallization occurs, which would easily cause inhomogeneity in texture. The crystal orientations can be controlled by conducting the recrystallization treatment at a temperature in the range of 1900°C to 2100°C.

The rhenium-tungsten rod material after the recrystallization treatment is subjected to a third SW process. The third SW process is preferably carried out at a heating temperature of 1200°C to 1500°C. The area reduction ratio with one heating is preferably 10% to 30%. The third SW process is continued until the rhenium-tungsten rod material has a drawable diameter (preferably, a diameter of 2 mm to 4 mm).

The rhenium-tungsten rod material after the third SW process is subjected to a first wire drawing process from a diameter of 1.2 mm or less to a diameter of 0.3 mm. The first wire drawing process is preferably carried out in a temperature range of 600°C to 1100°C. In the rhenium-tungsten wire of the present embodiment, it is necessary to form a sufficient oxide film on the tungsten surface in order for a carbon-based lubricant to sufficiently penetrate into the surface in the wire drawing step, and it is desirable to perform an annealing treatment multiple times at 900°C to 1200°C in an oxidizing atmosphere while the diameter is decreased from 1.2 mm or less to 0.3 mm. If the temperature falls below 900°C, the oxide film is not sufficiently formed, the lubrication effect is insufficient, and the wire is easily broken. On the other hand, if the temperature exceeds 1200°C, the strength of the rhenium-tungsten wire itself decreases and the wire is broken during wire drawing, and therefore the above temperature range is preferable.

The ReW wire after the first wire drawing process is subjected to a second wire drawing process from a diameter of 0.3 mm or less to a diameter of 0.05 mm. The second wire drawing process is preferably carried out at 500°C to 800°C. The process-enabling temperature varies depending on the wire diameter, and becomes higher as the diameter increases. If the processing temperature is lower than the process-enabling temperature, cracks, breakage, etc. frequently occur. If the processing temperature is higher than the process-enabling temperature, occurrence of seizure between the ReW wire and the die is expected, or a decrease in deformation resistance of the rhenium-tungsten wire is expected, and there occurs a diameter variation (thinning) after the wire drawing due to the drawing force. The area reduction ratio is preferably 15% to 35%. If the area reduction ratio is less than 15%, a difference in processed structure between the inner and outer portions, a residual stress, etc., occur during the processing, and cracks would occur. If the area reduction ratio is more than 35%, the drawing force excessively increases, which would greatly vary the diameter after the wire drawing and cause a breakage. The drawing rate is determined according to the balance between the capability of the heating device, the distance from the device to the die, and the area reduction ratio. A polishing process may additionally be performed during the wire drawing process.

The polishing process may adopt a method of, for example, conducting electrochemical polishing (electrolytic polishing) in an aqueous solution that contains sodium hydroxide at a concentration of 7 wt% to 15 wt%. It may also be possible to add a heat treatment for mitigating strains (without causing recrystallization). By the wire drawing process, a rhenium-tungsten wire having a diameter of 0.05 mm to 0.3 mm is obtained. Besides, there is a method of mechanical polishing, such as centerless polishing.

Another example of the structure containing the tungsten alloy of the embodiment is a stacked body including a first member containing at least one molybdenum or a molybdenum alloy, and a second member that is stacked on the first member and contains the tungsten alloy of the embodiment. The stacked body can be used for a target for an X-ray tube, such as an X-ray tube anode target.

The molybdenum alloy of the first member is not particularly limited. For example, the molybdenum alloy may contain, in addition to Mo, at least one selected from the group consisting of oxygen, carbon, titanium, zirconium, titanium carbide, hafnium carbide, zirconium carbide, and tantalum carbide.

The shape of the first member is not particularly limited, if the first member has a first surface on which the second member is stacked.

The stacked body may further include a third member containing carbon. The third member can be provided at a location of the first member, which is different from the location where the second member is provided. For example, the third member can be stacked on a second surface of the first member. The second surface may preferably be provided at a position facing the first surface of the first member, with the first member being interposed therebetween.

The structure including the first member and the second member is manufactured by, for example, a method to be described below.

### <Press Molding>

A mixed powder composed of raw material powders is prepared according to a mixing step of the raw material powders in the production of the tungsten alloy. The prepared mixed powder is put into a predetermined mold and press-molded to prepare a molded body. The pressing pressure at this time is desirably 200 MPa or more, and is preferably 200 MPa or more and 500 MPa or less. If the pressing pressure is less than 200 MPa, the molded body is not sufficiently dense, and a high-density sintered body is difficult to obtain. On the other hand, if the pressing pressure exceeds 500 MPa, the molded body is likely to crack, which is not preferable. The first member containing the molybdenum alloy and the second member containing the tungsten alloy may be molded and sintered together, or may be integrated after separately producing sintered bodies.

The obtained molded body is sintered in a hydrogen atmosphere, or in an inert gas atmosphere of argon or the like, or under vacuum. The sintering temperature is preferably 1900°C or above, and more preferably 2100°C or above. In a case where the sintering temperature is lower than 1900°C, the diffusion of rhenium atoms and tungsten atoms does not sufficiently proceed during sintering. The sintered body is forged as needed. After the processing into a product shape, a degassing treatment may be performed as needed.

The structure of the embodiment can be obtained by the above steps.

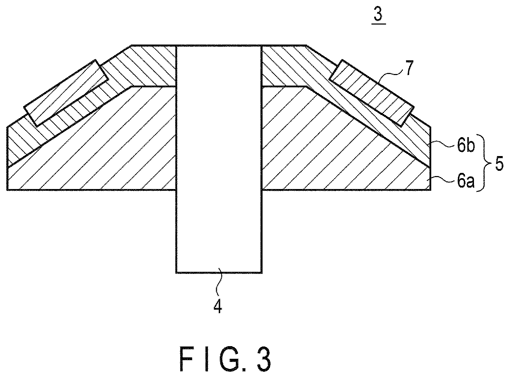

Referring to FIG. 3, an example is described in which the structure of the embodiment is applied to an X-ray tube anode target. An X-ray tube anode target 3 illustrated in FIG. 3 can generate X-rays by irradiating an electron beam on an electron beam irradiation surface. The X-ray tube anode target 3 includes a rotary shaft 4, a first member 5 provided on the rotary shaft 4 and including an electron beam irradiation surface, and a second member 7 provided on the first member 5. The first member 5 includes a first rotor 6a containing a molybdenum alloy, and a second rotor 6b containing a molybdenum alloy. The molybdenum alloy of the first rotor 6a may be the same as or different from the molybdenum alloy of the second rotor 6b. The first rotor 6a has a substantially truncated conical shape, and a through-hole, through which the rotary shaft 4 is inserted, is provided near the center. The second rotor 6b has a substantially ring shape, and a vicinity of the outer periphery thereof is inclined, and a through-hole in the vicinity of the center communicates with the through-hole of the first rotor 6a. The second rotor 6b is provided on that side of the first rotor 6a, which has the inclined surface. An outer surface of the second rotor 6b functions as an electron beam irradiation surface. The second member 7 has a ring shape and is provided at a predetermined position on the electron beam irradiation surface of the second rotor 6b. The second member 7 can function as an electron impact relaxation layer for relaxing an impact received at a time of electron beam irradiation.

Although not illustrated in FIG. 3, the X-ray tube anode target 3 may include a third member containing carbon. The third member containing carbon can be provided on that surface (lower surface in FIG. 3) of the first rotor 6a, which is opposite to the second rotor 6b.

According to the structure of the embodiment described above, since the structure includes the tungsten alloy of the embodiment, a required performance, such as discharge performance, can be maintained for a long period of time.

### (Examples)

Hereinafter, examples are described in detail.

### (Example 1)

A structure was produced by a method described below.

As raw material powders, a rhenium powder having an average particle size of 2.9 µm and a tungsten powder having an average particle size of 13 µm were used. The particle size distribution of the rhenium powder at a time when the rhenium powder was dispersed at a vacuum degree of -1.0 bar by using a powder disperser was measured by the above-described method. Table 1 shows, among the measurement results, the number of captured particles (pcs (pieces)), the number of particles (pcs) having a particle size of less than 1 µm, the ratio (%) of the particles having a particle size of less than 1 µm to the number of captured particles, the number of particles (pcs) having a particle size of less than 0.5 µm, and the ratio (%) of the particles having a particle size of less than 0.5 µm to the number of captured particles. As shown in Table 1, the rhenium powder had a frequency distribution in which the number ratio of particles having a particle size of less than 0.5 µm at a time when the dispersion was performed at a vacuum degree of -0.9 bar or more and -1.0 bar or less was 20% or more.

The ratio of the average particle size of the rhenium powder to the average particle size of the tungsten powder (Re average particle size/W average particle size) was 0.22.

The rhenium powder and pure tungsten powder were mixed in a slurry state by using a ketone-based solution, such that the ratio of rhenium became 3 wt%. The obtained slurry was dried, and a mixed powder composed of the raw material powders was obtained.

The mixed powder and the molybdenum alloy were press-molded, and a molded body having a two-layer structure of the mixed powder and the molybdenum alloy was obtained. The molded body was sintered in a hydrogen atmosphere at a temperature of 2100°C for 12 hours to obtain a sintered body. The sintered body was subjected to hot forging under the conditions of a hydrogen atmosphere, a heating temperature of 1600°C, and a forging ratio of 10%, which is a change ratio of the thickness of the forged body before and after forging, and thus a forged body was obtained. The forged body was subjected to a heat treatment as an annealing treatment at a temperature of 1600°C for 30 minutes in a hydrogen atmosphere, thereby to remove strains.

The forged body was subjected to a cutting process, and to a polishing process of a rhenium-tungsten alloy portion, and was finished into a predetermined shape.

The processed product was subjected to a VT treatment in vacuum at a temperature of 1600°C for five hours to remove gas components, and thereby a structure including a disk-shaped first member containing a molybdenum alloy and a disk-shaped second member stacked on one end surface of the first member and containing a tungsten alloy was obtained as a finished product.

The second member of the structure was cut perpendicular to the radial direction (diametrical direction) to take out a small piece. After the taken-out small piece was embedded in a resin, the small piece was mirror-polished to obtain a sample. Three arbitrary fields of view of the obtained sample were observed at a magnification of 2000 times by using SEM/EDX. Two arbitrary locations were selected for each field of view, and the rhenium concentration (wt%) in the tungsten alloy was measured by point analysis using EDX for each of six locations in total. The details of the point analysis are as described above. An average value (wt%) was determined from the obtained rhenium concentration (wt%), and a standard deviation (wt%) was obtained. Table 2 and Table 4 show these results, the average particle size (µm) of the rhenium powder used in the raw materials, the average particle size (µm) of the tungsten powder used in the raw materials, and ratio thereof (Re average particle size/W average particle size).

### (Example 2)

A rhenium-tungsten alloy and a structure were produced in the same manner as in Example 1, except that the rhenium powder and the pure tungsten powder were mixed such that the ratio of the rhenium was 2 wt%.

### (Example 3)

A rhenium-tungsten alloy and a structure were produced in the same manner as in Example 1, except that the rhenium powder and the pure tungsten powder were mixed such that the ratio of the rhenium was 27.5 wt%.

### (Example 4)

A rhenium-tungsten alloy and a structure were produced in the same manner as in Example 1, except that rhenium powder having an average particle size of 7.6 µm was used.

### (Example 5)

A rhenium-tungsten alloy and a structure were produced in the same manner as in Example 1, except that tungsten powder having an average particle size of 15.5 µm was used.

### (Example 6)

A rhenium-tungsten alloy and a structure were produced in the same manner as in Example 1, except that rhenium powder having an average particle size of 7.6 µm and tungsten powder having an average particle size of 8.0 µm were used.

### (Example 7)

A rhenium-tungsten alloy and a structure were produced in the same manner as in Example 1, except that rhenium powder having an average particle size of 1.6 µm and tungsten powder having an average particle size of 15.5 µm were used.

The particle size distribution of the rhenium powders used in Examples 4, 6 and 7 at a time when the rhenium powders were dispersed at a vacuum degree of -1.0 bar by using a powder disperser in the same manner as in Example 1 was measured by the above-described method. Table 3 shows, among the measurement results, the number of captured particles (pcs (pieces)), the number of particles (pcs) having a particle size of less than 1 µm, the ratio (%) of the particles having a particle size of less than 1 µm to the number of captured particles, the number of particles (pcs) having a particle size of less than 0.5 µm, and the ratio (%) of the particles having a particle size of less than 0.5 µm to the number of captured particles. As shown in Table 3, the rhenium powders used in Examples 4, 6 and 7 had a frequency distribution in which the number ratio of particles having a particle size of less than 0.5 µm at a time when the dispersion was performed at a vacuum degree of -0.9 bar or more and -1.0 bar or less was 20% or more. Note that the results of Example 1 are also shown in Table 3.

In addition, as regards the second member of the structure according to Examples 2 to 7, the rhenium concentration (wt%) in the tungsten alloy was measured by the same method as in Example 1, and a standard deviation (wt%) was obtained. Table 4 shows these results, the average particle size (µm) of the rhenium powder used in the raw materials, the average particle size (µm) of the tungsten powder used in the raw materials, and the Re/W (Re average particle size/W average particle size). Note that the results of Example 1 are also shown in Table 4.

### (Comparative Example 1)

A structure was produced in the same manner as in Example 1, except that rhenium powder to be described below is used as the rhenium power of the raw material.

As the rhenium powder of the raw material, rhenium powder having an average particle size of 13 µm was used. The particle size distribution of the rhenium powder at a time when the dispersion was performed at a vacuum degree of -1.0 bar by using a powder disperser was measured by the above-described method. Table 1 shows, among the measurement results, the number of captured particles (pcs), the number of particles (pcs) having a particle size of less than 1 µm, the ratio (%) of the particles having a particle size of less than 1 µm to the number of captured particles, the number of particles (pcs) having a particle size of less than 0.5 µm, and the ratio (%) of the particles having a particle size of less than 0.5 µm to the number of captured particles. As shown in Table 1, the rhenium powder had a frequency distribution in which the number ratio of particles having a particle size of less than 0.5 µm at a time when the dispersion was performed at a vacuum degree of -0.9 bar or more and -1.0 bar or less was less than 20%.

### (Comparative Example 2)

A structure was produced in the same manner as in Example 1, by using as a raw material a rhenium powder having an average particle size of 2.9 µm, which is different from the rhenium powder used in Example 1. The particle size distribution of the rhenium powder at a time when the dispersion was performed at a vacuum degree of - 1.0 bar by using a powder disperser was measured by the above-described method. Table 3 shows, among the measurement results, the number of captured particles (pcs), the number of particles (pcs) having a particle size of less than 1 µm, the ratio (%) of the particles having a particle size of less than 1 µm to the number of captured particles, the number of particles (pcs) having a particle size of less than 0.5 µm, and the ratio (%) of the particles having a particle size of less than 0.5 µm to the number of captured particles. As shown in Table 3, the rhenium powder had a frequency distribution in which the number ratio of particles having a particle size of less than 0.5 µm at a time when the dispersion was performed at a vacuum degree of -0.9 bar or more and -1.0 bar or less was less than 20%.

The average value (wt%) and standard deviation (wt%) of the rhenium concentration (wt%) of the tungsten alloys of the structures obtained in Comparative Examples 1 and 2 were measured by the same method as in Example 1, and Tables 2 and 4 show these results, the average particle size (µm) of the rhenium powder used in the raw materials, the average particle size (µm) of the tungsten powder used in the raw materials, and the ratio thereof (Re average particle size/W average particle size).

**(Table 1)**

| Table 1 | Number of captured particles (pcs) | Number of particles (pcs) with size of less than 1 µm | Ratio (%) of number of particles with size of less than 1 µm | Number of particles (pcs) with size of less than 0.5 µm | Ratio (%) of number of particles with size of less than 0.5 µm |
|---|---|---|---|---|---|
| Example 1 | 409 | 383 | 94 | 329 | 80 |
| Comparative Example 1 | 267 | 66 | 25 | 32 | 12 |

**(Table 2)**

| Table 2 | Average particle size (µm) of rhenium powder | Average value (wt%) of rhenium concentrations in tungsten alloy | Standard deviation (wt%) of rhenium concentrations |
|---|---|---|---|
| Example 1 | 2.9 | 2.91 | 0.62 |
| Comparative Example 1 | 13 | 2.02 | 1.23 |

**(Table 3)**

| Table 3 | Number of captured particles (pcs) | Number of particles (pcs) with size of less than 1 µm | Ratio (%) of number of particles with size of less than 1 µm | Number of particles (pcs) with size of less than 0.5 µm | Ratio (%) of number of particles with size of less than 0.5 µm |
|---|---|---|---|---|---|
| Example 1 | 409 | 383 | 94 | 329 | 80 |
| Example 2 | 409 | 383 | 94 | 329 | 80 |
| Example 3 | 409 | 383 | 94 | 329 | 80 |
| Example 4 | 379 | 197 | 52 | 83 | 22 |
| Example 5 | 409 | 383 | 94 | 329 | 80 |
| Example 6 | 379 | 197 | 52 | 83 | 22 |
| Example 7 | 421 | 408 | 97 | 379 | 90 |
| Example 8 | 409 | 383 | 94 | 329 | 80 |
| Example 9 | 409 | 383 | 94 | 329 | 80 |
| Comparative Example 1 | 267 | 66 | 25 | 32 | 12 |
| Comparative Example 2 | 388 | 345 | 89 | 31 | 8 |
| Comparative Example 3 | 388 | 345 | 89 | 31 | 8 |

**(Table 4)**

| Table 4 | Average particle size (um) of rhenium powder | Average particle size (µm) of tungsten powder | Re/W | Average value (wt%) of rhenium concentrations in tungsten alloy | Standard deviation (wt%) of rhenium concentrations |
|---|---|---|---|---|---|
| Example 1 | 2.9 | 13 | 0.22 | 2.91 | 0.62 |
| Example 2 | 2.9 | 13 | 0.22 | 2.13 | 0.59 |
| Example 3 | 2.9 | 13 | 0.22 | 26.9 | 0.73 |
| Example 4 | 7.6 | 13 | 0.58 | 2.95 | 0.88 |
| Example 5 | 2.9 | 15.5 | 0.19 | 2.92 | 0.71 |
| Example 6 | 7.6 | 8 | 0.95 | 3.03 | 0.85 |
| Example 7 | 1.6 | 15.5 | 0.10 | 3.05 | 0.54 |
| Example 8 | 2.9 | 13 | 0.22 | 25.91 | 0.71 |
| Example 9 | 2.9 | 13 | 0.22 | 5.01 | 0.69 |
| Comparative Example 1 | 13 | 13 | 1.00 | 2.02 | 1.23 |
| Comparative Example 2 | 2.9 | 13 | 0.22 | 2.25 | 1.1 |
| Comparative Example 3 | 2.9 | 13 | 0.22 | 26.3 | 1.13 |

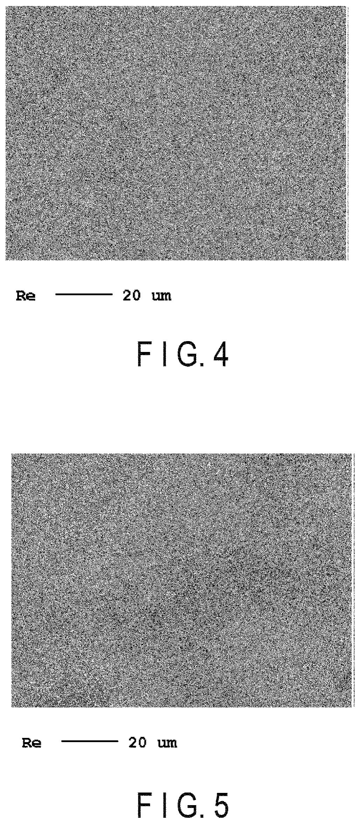

The tungsten alloys of Example 1 and Comparative Example 1 were subjected to element mapping analysis of Re by an electron probe micro analyzer (EPMA). FIG. 4 shows a Re element mapping image of the tungsten alloy of Example 1, and FIG. 5 shows a Re element mapping image of the tungsten alloy of Comparative Example 1. As shown in FIG. 4, it is found that the Re element mapping image of the tungsten alloy of Example 1 has less color unevenness and Re is present relatively uniformly. In addition, as shown in FIG. 5, it is found that the Re element mapping image of the tungsten alloy of Comparative Example 1 has a lot of color unevenness such as partial presence of a dark color portion, and that Re is dispersed unevenly in a specific place.

X-ray tubes were fabricated by using target alloys of the structures of Examples 1 to 7 and Comparative Examples 1 and 2 as targets, attaching shafts (rotating shafts), and incorporating the targets into the X-ray tubes. The number of discharges while X-rays were output 30000 times (rotation speed of 8000 rpm) using each X-ray tube was evaluated. Table 5 shows the results.

**(Table 5)**

| Table 5 | Number of discharges |
|---|---|
| Example 1 | 0 |
| Example 2 | 0 |
| Example 3 | 0 |
| Example 4 | 0 |
| Example 5 | 0 |
| Example 6 | 0 |
| Example 7 | 0 |
| Comparative Example 1 | 20 |
| Comparative Example 2 | 15 |

As is clear from Table 5, the targets of Examples 1 to 7 had a number of discharges of 0 while outputting X-rays (rotation speed of 8000 rpm) 30000 times, and were able to output X-rays 30000 times or more in one discharge. In contrast, the targets of Comparative Examples 1 and 2 had a number of discharges of 15 or more during the output under the same conditions. The tungsten alloys used for the targets of Examples 1 to 7 have excellent rhenium dispersibility, and thus can achieve long-term electron emission characteristics.

### (Example 8)

Using the same rhenium powder and pure tungsten powder as in Example 1, the powders were mixed and molded to obtain a sintered body, such that the ratio of the rhenium was 26 wt%. From the sintered body, a rhenium-tungsten wire rod with a diameter (φ) of 3 mm was produced by the above-described method for processing the rod material and wire material, and was processed into a thermocouple.

### (Example 9)

Using the same rhenium powder and pure tungsten powder as in Example 1, the powders were mixed and molded to obtain a sintered body, such that the ratio of the rhenium was 5 wt%. From the sintered body, a rhenium-tungsten wire rod with a diameter (φ) of 3 mm was produced by the above-described method for processing the rod material and wire material, and was processed into a thermocouple.

### (Comparative Example 3)

Using the same powder as in Comparative Example 2 as raw material powder, a rhenium-tungsten wire rod with a diameter (φ) of 3 mm was produced by the same method as in Example 8, and was processed into a thermocouple.

The rhenium-tungsten wire rods of Example 8 and Comparative Example 3 were cut parallel to the diametrical direction to take out small pieces. After each of the taken-out small pieces was embedded in a resin, the small piece was mirror-polished to obtain a sample. Three arbitrary fields of view of the obtained sample were observed at a magnification of 2000 times by using SEM/EDX. Two arbitrary locations were selected for each field of view, and the rhenium concentration (wt%) in the tungsten alloy was measured by point analysis using EDX for each of six locations in total. The details of the point analysis are as described above. An average value (wt%) was determined from the obtained rhenium concentration (wt%), and a standard deviation (wt%) was obtained. Table 4 shows these results, the average particle size (µm) of the rhenium powder used in the raw materials, the average particle size (µm) of the tungsten powder used in the raw materials, and ratio thereof (Re average particle size/W average particle size).

Thermocouples composed of Examples 8 and 9 and Comparative Example 3 and Example 9 were manufactured. The obtained thermocouples were used as a thermocouple of Example 8 and a thermocouple of Comparative Example 3, respectively. The electromotive force at 2000°C was measured simultaneously with a reference thermocouple confirming to ASTM E 230-11, and errors relative to the reference thermocouple were evaluated. Table 6 shows the errors relative to the reference.

**(Table 6)**

| Table 6 | Error |
|---|---|
| Example 8 | 0.5% |
| Comparative Example 3 | 1.2% |

As is clear from Table 6, the error of the thermocouple of Example 8 is smaller than that of the thermocouple of Comparative Example 3. From this result, the tungsten alloy used for the thermocouple of Example 8 has excellent dispersibility of Re, and thus the Re content in the wire becomes uniform, a thermoelectromotive force close to the reference can be output, and a measurement variation can be reduced.

As shown in the above results, the tungsten alloys of Examples 1 to 8 have improved Re dispersibility, and thus the discharge characteristics at high temperatures of the tungsten alloys and the structures including the tungsten alloys can be improved, and the measurement variation of the thermocouples using the tungsten alloys can be reduced.

According to the tungsten alloy of at least one of these embodiments, the standard deviation of the rhenium concentration based on the point analysis by the scanning electron microscope/energy dispersive X-ray spectroscopy at arbitrary six points on an arbitrary cross section is 1.0 wt% or less, and therefore the tungsten alloy with improve rhenium dispersibility can be provided.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

Hereinafter, inventions of the embodiments are supplementarily described.
<1>. A tungsten alloy containing rhenium, wherein a standard deviation of a rhenium concentration based on point analysis by scanning electron microscope/energy dispersive X-ray spectroscopy (scanning electron microscope-energy dispersive X-ray spectroscopy) at arbitrary six points on an arbitrary cross section is 1.0 wt% or less.
<2>. The tungsten alloy according to <1>, wherein a content of the rhenium is 2 wt% or more and 30 wt% or less.
<3>. The tungsten alloy according to <1>, wherein a content of the rhenium is 2 wt% or more and 28 wt% or less.
<4>. The tungsten alloy according to <1>, wherein a content of the rhenium is 2 wt% or more and 12 wt% or less.
<5>. The tungsten alloy according to any one of <1> to <4>, wherein the rhenium is derived from rhenium powder having a frequency distribution in which a number ratio of particles having a particle size of less than 0.5 µm at a time when dispersion is performed at a vacuum degree of - 0.9 bar or more and -1.0 bar or less is 20% or more.
<6>. A structure including the tungsten alloy according to any one of <1> to <5>.
<7>. The structure according to <6>, wherein the structure is at least one selected from the group consisting of a target for an X-ray tube, a probe pin, a heater for an electron tube, a filament, a thermocouple, a medical needle, and a wire.
<8>. A structure comprising:
   a first member including at least one of molybdenum or a molybdenum alloy; and
   a second member stacked on the first member and containing the tungsten alloy according to any one of <1> to <5>.
<9>. The structure according to <8>, wherein
   the second member is stacked on a part of the first member, and
   the structure further comprises a third member stacked on another part of the first member and containing carbon.
<10>. The structure according to <8>, wherein the structure is a target for an X-ray tube.
<11>. Rhenium powder used for a raw material of the tungsten alloy according to any one of <1> to <5>, wherein the rhenium powder has a frequency distribution in which a number ratio of particles having a particle size of less than 0.5 µm at a time when dispersion is performed at a vacuum degree of -0.9 bar or more and -1.0 bar or less is 20% or more.
<12>. The rhenium powder according to <11>, wherein the dispersion is by a powder disperser.
<13>. The rhenium powder according to <11> or <12>, wherein the number ratio of the particles having the particle size of less than 0.5 µm in the frequency distribution is 30% or more.

### Reference Signs List

1... Rhenium particle, 3...X-ray tube anode target, 4...Rotary shaft, 5...First member, 6a...First rotor, 6b...Second rotor, 7...Second member.

## Claims

1. A tungsten alloy containing rhenium, wherein a standard deviation of a rhenium concentration based on point analysis by scanning electron microscope/energy dispersive X-ray spectroscopy at arbitrary six points on an arbitrary cross section is 1.0 wt% or less.

2. The tungsten alloy according to claim 1, wherein a content of the rhenium is 2 wt% or more and 30 wt% or less.

3. The tungsten alloy according to claim 1, wherein a content of the rhenium is 2 wt% or more and 28 wt% or less.

4. The tungsten alloy according to claim 1, wherein a content of the rhenium is 2 wt% or more and 12 wt% or less.

5. The tungsten alloy according to claim 1, wherein the rhenium is derived from rhenium powder having a frequency distribution in which a number ratio of particles having a particle size of less than 0.5 µm at a time when dispersion is performed at a vacuum degree of -0.9 bar or more and -1.0 bar or less is 20% or more.

6. A structure including the tungsten alloy according to any one of claims 1 to 5.

7. The structure according to claim 6, wherein the structure is at least one selected from the group consisting of a target for an X-ray tube, a probe pin, a heater for an electron tube, a filament, a thermocouple, a medical needle, and a wire.

8. A structure comprising:
a first member including at least one of molybdenum or a molybdenum alloy; and
a second member stacked on the first member and containing the tungsten alloy according to any one of claims 1 to 5.

9. The structure according to claim 8, wherein
the second member is stacked on a part of the first member, and
the structure further comprises a third member stacked on another part of the first member and containing carbon.

10. The structure according to claim 8, wherein the structure is a target for an X-ray tube.

11. Rhenium powder used for a raw material of the tungsten alloy according to any one of claims 1 to 5, wherein the rhenium powder has a frequency distribution in which a number ratio of particles having a particle size of less than 0.5 µm at a time when dispersion is performed at a vacuum degree of -0.9 bar or more and -1.0 bar or less is 20% or more.

12. The rhenium powder according to claim 11, wherein the dispersion is by a powder disperser.

13. The rhenium powder according to claim 11, wherein the number ratio of the particles having the particle size of less than 0.5 µm in the frequency distribution is 30% or more.
